# EUROPEAN PATENT APPLICATION

(11) **EP 4 567 519 A1**
(43) Date of publication of application: **11.06.2025**
(21) Application number: 24215008.4
(22) Date of filing: 25.11.2024
(51) Int. Cl.: G03G 15/00, G06F 3/12, H04N 1/00

(54) **IMAGE FORMING APPARATUS CAPABLE OF RETURNING FROM SECOND POWER STATE TO FIRST POWER STATE ACCORDING TO NUMBER OF TIMES PERSON HAS BEEN DETECTED WITHIN PREDETERMINED PERIOD**

(30) Priority: 04.12.2023 JP 2023204907
(71) Applicant: KYOCERA Document Solutions Inc., Osaka-shi, Osaka, 540-8585 (JP)
(72) Inventor: OKAZAKI, Yusuke, Osaka 540-8585 (JP)
(74) Representative: Herrero & Asociados, S.L.

(57) **Abstract**

An image forming apparatus (1) includes an image forming device (12), an operation device (16), a detection device (21), and a control device (100) functioning as a controller (10). When accepting through the operation device (16) an instruction to transition to a second power state, the controller (10) allows the image forming apparatus (1) to transition from a first power state to the second power state. The controller (10) counts a number of times that the detection device (21) has detected a person existing within a predetermined range within a predetermined first period from a time of acceptance of the instruction to transition. When the counted number of times reaches a predetermined number of at least two, the controller (10) returns the image forming apparatus (1) from the second power state to the first power state. When the counted number of times falls short of the predetermined number, the controller (10) keeps the image forming apparatus (1) in the second power state.

## Description

### BACKGROUND

The present invention relates to image forming apparatuses and particularly relates to a technique for determining the timing of return from a power-saving mode to a normal mode.

There is known an image forming apparatus that returns from a power-saving mode to a normal mode when a human detection sensor has detected a person. In such an image forming apparatus, when, after the user holds down a power-saving key to make the transition of the image forming apparatus to the power-saving mode, the user having held down the power-saving key leaves the image forming apparatus, the human detection sensor may detect the user. In this case, even just after transition to the power-saving mode by the user's hold-down of the power-saving key, the image forming apparatus undesirably returns to the normal mode.

As a solution to this problem, there is known a technique in which, generally, when the apparatus transitions to the power-saving mode by the hold-down of the power-saving key, the return to the normal mode based on the detection of a person by the human detection sensor is suspended until the human detection sensor first detects a person and then no longer detect the person. As another solution, it is possible to propose a technique of determining whether to return to the normal mode using a high-performance human detection sensor capable of detecting user's approach to and leaving from the image forming apparatus.

### SUMMARY

A technique improved over the aforementioned techniques is proposed as one aspect of the present invention.

An image forming apparatus according to an aspect of the present invention includes an image forming device, an operation device, a detection device, and a control device. The image forming device forms an image on a recording paper sheet. The operation device accepts an input of a user's instruction. The detection device detects a person existing within a predetermined range. The control device includes a processor and functions as a controller through the processor executing a control program. When the image forming apparatus is in a predetermined first power state and, in this state, the controller accepts through the operation device an instruction to transition to a second power state smaller in power consumption than in the first power state, the controller allows the image forming apparatus to transition from the first power state to the second power state. The controller counts a number of times that the detection device has detected a person within a predetermined first period from a time of acceptance of the instruction to transition. When the counted number of times reaches a predetermined number of at least two, the controller returns the image forming apparatus from the second power state to the first power state. When the counted number of times falls short of the predetermined number, the controller keeps the image forming apparatus in the second power state.

### BRIEF DESCRIPTION OF THE DRAWINGS

FIG. 1 is a frontal cross-sectional view showing the structure of an image forming apparatus according to one embodiment of the present invention.
FIG. 2 is a block diagram showing the configuration of the image forming apparatus.
FIG. 3 is a flowchart showing return determination processing.
FIG. 4 is a diagram showing the operation of the image forming apparatus when the number of times a person has been detected reaches a specified number within a first period.
FIG. 5 is a diagram showing the operation of the image forming apparatus when the number of times a person has been detected falls short of the specified number within the first period.

### DETAILED DESCRIPTION

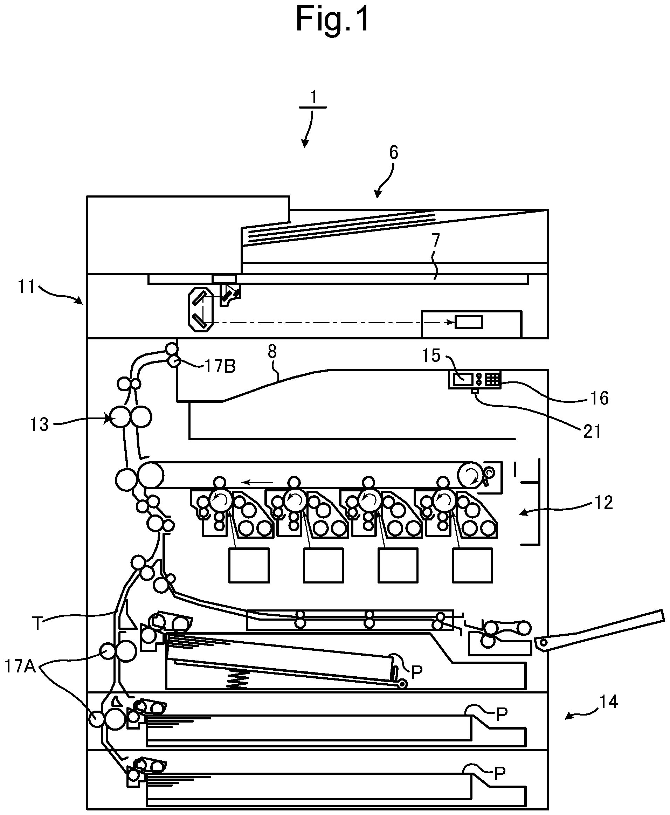

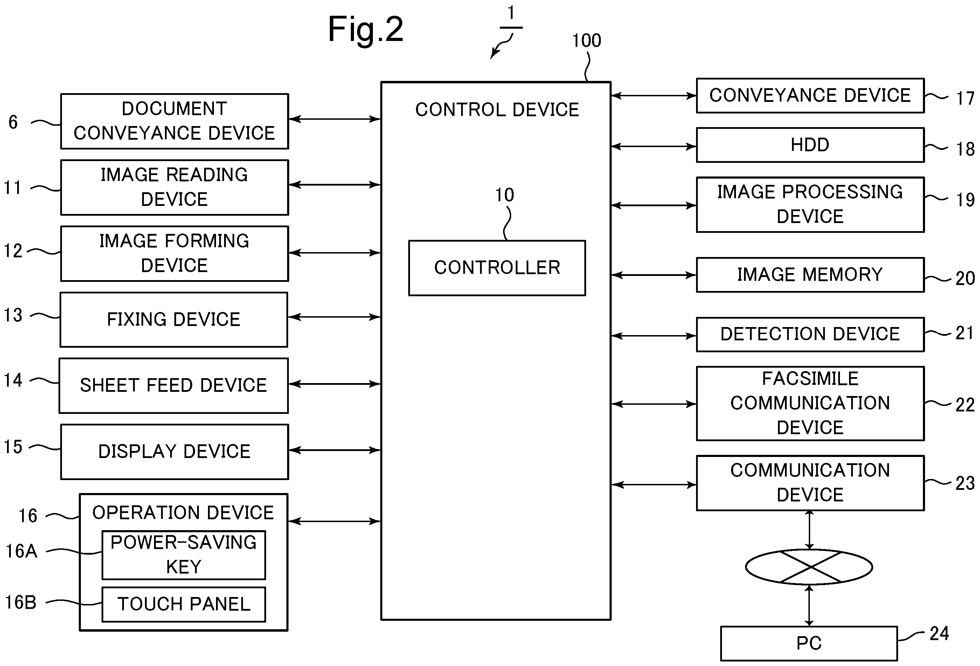

Hereinafter, a description will be given of an image forming apparatus according to one embodiment of the present invention with reference to the drawings. FIG. 1 is a frontal cross-sectional view showing the structure of the image forming apparatus 1 according to the one embodiment of the present invention. FIG. 2 is a block diagram showing the configuration of the image forming apparatus 1.

### [Apparatus Structure and Configuration]

Referring to FIG. 1, the image forming apparatus 1 is a multifunction peripheral having multiple functions, such as a copy function, a transmission function, a print function, and a facsimile function. A housing of the image forming apparatus 1 contains an image reading device 11, an image forming device 12, a fixing device 13, a sheet feed device 14, and so on.

The image reading device 11 is an ADF (auto document feeder) including: a document conveyance device 6 that conveys an original document placed on a document loading table; and a scanner that optically reading an original document conveyed by the document conveyance device 6 or an original document placed on a platen glass 7. The image reading device 11 irradiates the original document with light from a lighting part, receives light reflected from the original document on a CCD (charge-coupled device) sensor to read an image of the original document, and thus generates image data representing the image of the original document.

The image forming device 12 includes, for each of different color toners, a photosensitive drum, a charging device, an exposure device, a developing device, and a transfer device. The image forming device 12 forms an image formed of a toner image on a recording paper sheet P being conveyed along a conveyance path T by a conveyance device 17, based on the image data generated by the image reading device 11, image data input through a communication device 23 or other type of image data.

The fixing device 13 applies heat and pressure to the recording paper sheet P having the toner image formed thereon by the image forming device 12, thus fixing the toner image on the recording paper sheet P. The recording paper sheet P having the toner image fixed thereon is discharged to a sheet output tray 8.

The sheet feed device 14 includes a manual feed tray and a plurality of sheet feed cassettes. The sheet feed device 14 pulls out recording paper sheets P contained in one of the plurality of sheet feed cassettes or recording paper sheets placed on the manual feed tray, sheet by sheet, with a pick-up roller and feeds forward the pulled-out recording paper sheet to the conveyance path T.

Referring to FIG. 2, the image forming apparatus 1 includes a control device 100. The control device 100 includes a processor, a RAM (random access memory), and a ROM (read only memory). The processor is, for example, a CPU (central processing unit), an MPU (micro processing unit) or an ASIC (application specific integrated circuit).

The control device 100 is electrically connected to the document conveyance device 6, the image reading device 11, the image forming device 12, the fixing device 13, the sheet feed device 14, a display device 15, an operation device 16, the conveyance device 17, an HDD (hard disk drive) 18, an image processing device 19, an image memory 20, a detection device 21, a facsimile communication device 22, a communication device 23, and so on.

When each of various types of control programs stored in the ROM built in the control device 100 or the HDD 18 is executed by the above processor, the control device 100 functions as a controller 10. The controller 10 governs the overall operation control of the image forming apparatus 1. More specifically, the controller 10 controls the operations of the devices constituting the image forming apparatus 1 and communications with a PC (personal computer) 24 and other external devices connected via a network.

Alternatively, the controller 10 may not be implemented by the operation of the processor in accordance with the above control programs, but may instead be configured operatively by a logic circuit, or may be configured implementably by two or more control devices

The display device 15 is display equipment composed of a liquid crystal display or an organic EL (an organic light-emitting diode) display. The display device 15 displays various screens related to various functions executable by the image forming apparatus 1.

The operation device 16 includes a plurality of hard keys, including a power-saving key 16A for use in inputting an instruction to transition from a normal mode to a power-saving mode. The operation device 16 further includes a touch panel 16B superposed on the display device 15. The operation device 16 accepts an input of a user's instruction related to each of the functions executable by the image forming apparatus 1.

The conveyance device 17 includes: rollers including conveyance roller pairs 17A and an ejection roller pair 17B; and a conveyance motor connected to the conveyance roller pairs 17A and the ejection roller pair 17B. The controller 10 drives the conveyance motor to rotate the conveyance roller pairs 17A and the ejection roller pair 17B, thus allowing the rollers to convey the recording paper sheet P, which has been fed by the sheet feed device 14, toward the image forming device 12 and the sheet output tray 8 along the conveyance path T.

The HDD 18 stores various types of data, including image data generated by the image reading device 11 and various control programs for implementing the operations of the image forming apparatus 1. In this embodiment, the HDD 18 stores a return determination program for use in executing return determination processing to be described hereinafter.

The image processing device 19 performs, as necessary, image processing of image data generated by the image reading device 11. The image memory 20 includes a region that temporarily stores image data generated by the image reading device 11.

The detection device 21 is provided on the front side of the image forming apparatus 1. The detection device 21 is a human detection sensor that detects a person existing within a predetermined range around the image forming apparatus 1. The detection device 21 may be any one generally used as a detection device and is not particularly limited, and, for example, an infrared sensor may be used.

The facsimile communication device 22 performs connection to a public line and transfers image data to and from other facsimile devices via the public line. The communication device 23 includes a communication module, such as a LAN (local area network) board. The controller 10 performs data communications through the communication device 23 with external devices, such as the PC 24, connected thereto via the network.

Each of the devices constituting the image forming apparatus 1 is connected to a power supply. When the image forming apparatus 1 is powered on by the user, electric power is supplied from the power supply to each of the devices of the image forming apparatus 1.

The controller 10 allows the image forming apparatus 1 to operate in either a normal mode or a power-saving mode. In the normal mode, the image forming apparatus 1 operates in a predetermined first power state. The first power state refers to a state where power is suppled well to each of the devices of the image forming apparatus 1 to enable immediate execution of various functions of the image forming apparatus 1.

In the power-saving mode, the image forming apparatus 1 operates in a second power state smaller in power consumption than in the first power state. The second power state refers to a state where power supply to each of the devices of the image forming apparatus 1 is reduced or shut off and only a bare minimum of power to operate the image forming apparatus 1 is supplied to each of the devices of the image forming apparatus 1. In the power-saving mode, for example, a fixing roller of the fixing device 13 is held at low temperature and the screen of the display device 15 is hidden.

In this embodiment, the controller 10 operates in accordance with the above-described return determination program to execute return determination processing, wherein when the image forming apparatus 1 is in the normal mode and, in this state, the controller 10 accepts through the operation device 16 an instruction to transition to the power-saving mode, the controller 10 allows the image forming apparatus 1 to transition from the normal mode to the power-saving mode and counts the number of times that the detection device 21 has detected a person within a predetermined period from the time of acceptance of the instruction to transition, wherein when the counted number of times reaches a specified number, the controller 10 returns the image forming apparatus 1 from the power-saving mode to the normal mode, and wherein when the counted number of times falls short of the specified number, the controller 10 keeps the image forming apparatus 1 in the power-saving mode.

### [Operation]

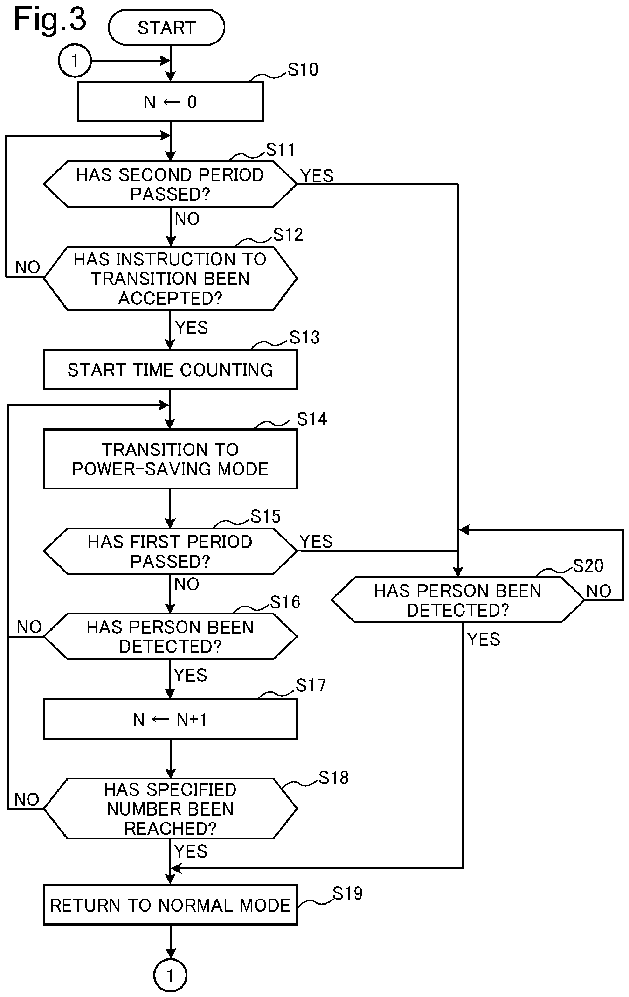

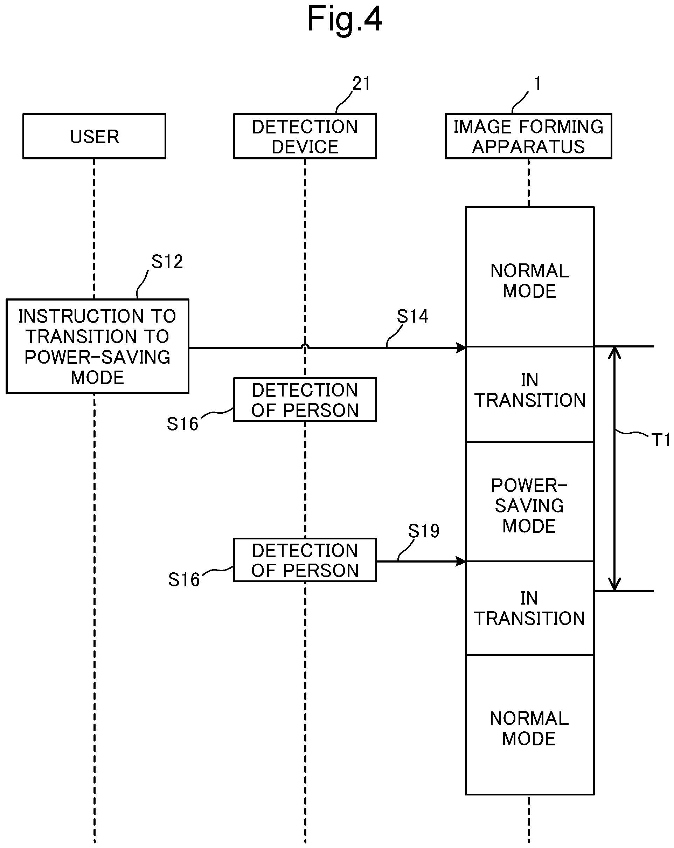

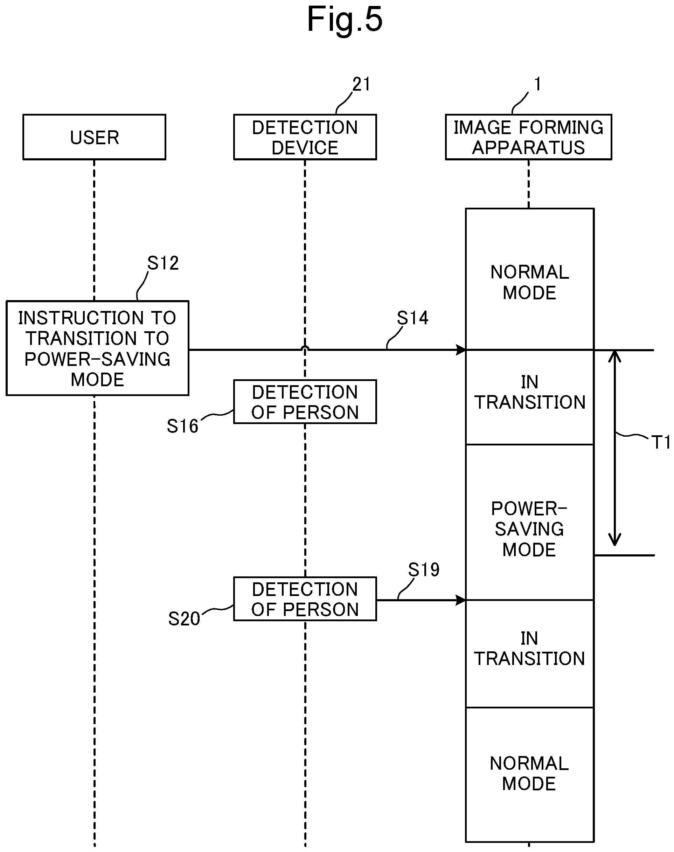

Hereinafter, a description will be given of the operation of the image forming apparatus 1 during execution of the return determination processing with reference to FIGS. 3 to 5 and so on. FIG. 3 is a flowchart showing the return determination processing. FIG. 4 is a diagram showing the operation of the image forming apparatus 1 when the number of times a person has been detected reaches the specified number within a first period. FIG. 5 is a diagram showing the operation of the image forming apparatus 1 when the number of times a person has been detected falls short of the specified number within the first period.

When the image forming apparatus 1 is powered on by the user, the controller 10 starts up the image forming apparatus 1 to operate it in the normal mode and launches the return determination program stored in the HDD 18 to start execution of the return determination processing shown in FIG. 3. When starting the execution of the return determination processing, the controller 10 resets the value of a variable N indicated by a number-of-detections counter for use in counting the number of times the detection device 12 has detected a person to "0" (step S10).

After the processing in step S10, the controller 10 determines whether or not a predetermined second period has passed before the operation device 16 accepts an instruction (step S11). Here, the controller 10 previously sets the second period at a predetermined default period (for example, five minutes). Alternatively, the controller 10 may set the second period in accordance with an instruction from an administrator or a user, the instruction indicating a period and having been accepted through the operation device 16 by the controller 10.

In this case, the controller 10 determines that the second period has not passed (NO in step S11) and determines whether or not an instruction to transition to the power-saving mode has been accepted (step S12). In this case, the controller 10 determines that no instruction to transition has been accepted (NO in step S12) and goes back to the processing in step S11.

### (1) When Power-Saving Key 16AHas Been Held Down

When the user holds down the power-saving key 16A while the image forming apparatus 1 is in the normal mode, the controller 10 determines that an instruction to transition to the power-saving mode has been accepted (YES in step S12) and starts time counting from the time of acceptance of the instruction to transition using a general time counting function (step S13). After the processing in step S13, the controller 10 allows the image forming apparatus 1 to transition from the normal mode to the power-saving mode (step S14) as shown in FIGS. 4 and 5.

After the processing in step S14, the controller 10 determines whether or not a predetermined first period T1 has passed from the time of acceptance of the instruction to transition (step S15). Here, the controller 10 previously sets the first period T1 at a predetermined default period (for example, ten seconds). Alternatively, the controller 10 may set the first period T1 in accordance with an instruction from an administrator or a user, the instruction indicating a period and having been accepted through the operation device 16 by the controller 10.

### (1-1) When Number of Times Person Has Been Detected Within First Period T1 Reaches Specified Number

When determining that the first period T1 has not passed (NO in step S15), the controller 10 determines whether or not the detection device 21 has detected any person existing within a predetermined range around the image forming apparatus 1 (step S16). In this case, the controller 10 determines that the detection device 21 has detected no person (NO in step S16) and goes back to the processing in step S15.

Here, assume that before the first period T1 passes, the user having held down the power-saving key 16A has left the image forming apparatus 1 and the detection device 21 has detected the user. The controller 10 determines that the first period T1 has not passed (NO in step S15), determines, as shown in FIGS. 4 and 5, that the detection device 21 has detected any person (YES in step S16), and adds 1 to the value of the variable N indicated by the number-of-detections counter (step S17).

After the processing in step S17, the controller 10 determines whether or not the value of the variable N has reached a predetermined specified number (step S18). Here, the controller 10 previously sets the specified number at a predetermined default number (in this case, two). Alternatively, the controller 10 may set the specified number in accordance with an instruction from an administrator or a user, the instruction indicating a number and having been accepted through the operation device 16 by the controller 10.

In this case, since the value of the variable N is " 1", the controller 10 determines that the value of the variable N has not reached the predetermined specified number (NO in step S18), keeps the image forming apparatus 1 in the power-saving mode, and goes back to the processing in step S15.

Here, assume that before the first period T1 passes, another user different from the user having held down the power-saving key 16A has approached the image forming apparatus 1 to use the image forming apparatus 1 and the detection device 21 has detected the other user. The controller 10 determines that the first period T1 has not passed (NO in step S15), determines, as shown in FIG. 4, that the detection device 21 has detected any person (YES in step S16), and adds 1 to the value of the variable N indicated by the number-of-detections counter (step S17).

In this case, since the value of the variable N becomes "2", the controller 10 determines that the value of the variable N has reached the predetermined specified number (YES in step S18), and returns the image forming apparatus 1 from the power-saving mode to the normal mode (step S19) as shown in FIG. 4. After the processing in step S19, the controller 10 goes back to the processing in step S10.

### (1-2) When Number of Times Person Has Been Detected Within First Period T1 Falls Short of Specified Number

Here, assume that a user having held down the power-saving key 16A has left the image forming apparatus 1, the detection device 21 has then detected the user like the above case, and, thereafter, the first period T1 has passed before the detection device 21 further detects any person.

In this case, the controller 10 determines that the first period T1 has passed (YES in step S15) and determines whether or not the detection device 21 has detected any person (step S20). In this case, the controller 10 determines that the detection device 21 has detected no person (NO in step S20) and repeats the processing in step S20.

Here, assume that another user different from the user having held down the power-saving key 16A has approached the image forming apparatus 1 to use the image forming apparatus 1 and the detection device 21 has detected the other user. The controller 10 determines, as shown in FIG. 5, that the detection device 21 has detected any person (YES in step S20) and returns the image forming apparatus 1 from the power-saving mode to the normal mode (step S19). After the processing in step S19, the controller 10 goes back to the processing in step S10.

### (2) When Second Period Has Passed Before Operation Device 16 Accepts Instruction

Here, assume that the image forming apparatus 1 is in the normal mode and, in this state, the second period has passed before the operation device 16 accepts an instruction. The controller 10 determines that the second period has passed (YES in step S11) and determines whether or not the detection device 21 has detected any person (step S20). In this case, the controller 10 determines that the detection device 21 has detected no person (NO in step S20) and repeats the processing in step S20.

Here, assume that, for example, another user different from the user having powered on the image forming apparatus 1 has approached the image forming apparatus 1 to use the image forming apparatus 1 and the detection device 21 has detected the other user. The controller 10 determines that the detection device 21 has detected any person (YES in step S20) and returns the image forming apparatus 1 from the power-saving mode to the normal mode (step S19). After the processing in step S19, the controller 10 goes back to the processing in step S10.

In the general technique described previously, when a user having held down the power-saving key stays close to the image forming apparatus for a long time, the return to the normal mode is suspended until the user leaves the image forming apparatus. Therefore, the convenience of other users who want to use the image forming apparatus may be impaired. In addition, when the image forming apparatus is provided with such a high-performance human detection sensor as described previously, a problem of cost increase arises.

Unlike this, in the above embodiment, when the image forming apparatus 1 is in the normal mode and, in this state, the controller 10 accepts through the operation device 16 an instruction to transition to the power-saving mode, the controller 10 allows the image forming apparatus 1 to transition from the normal mode to the power-saving mode. The controller 10 counts the number of times that the detection device 21 has detected a person within the first period from the time of acceptance of the instruction to transition. When the counted number of times reaches the specified number, the controller 10 returns the image forming apparatus 1 from the power-saving mode to the normal mode. When the counted number of times within the first period falls short of the specified number, the controller 10 keeps the image forming apparatus 1 in the power-saving mode.

Thus, without use of a high-performance sensor, it can be prevented that, within the first period from the time of acceptance of the instruction to transition, the image forming apparatus undesirably returns to the normal mode. In addition, after the first period passes, the determination of whether to return to the normal mode based on the counted number of times is not made. Therefore, even if a user having held down the power-saving key stays close to the image forming apparatus, other users can use the image forming apparatus. Therefore, an image forming apparatus low in cost and excellent in convenience and power-saving capability can be provided.

Furthermore, in the above embodiment, the controller 10 sets the first period at a predetermined default period. Alternatively, the controller 10 sets the first period in accordance with an instruction accepted through the operation device 16 by the controller 10 and indicating a period.

Thus, the first period can be set at an appropriate period without any instruction input by an administrator or a user or the administrator or the user can set the first period at a desired period. Therefore, the user's convenience can be further increased.

In addition, in the above embodiment, when, after the first period passes from the time of acceptance of the instruction to transition, the detection device 21 first detects a person, the controller 10 returns the image forming apparatus 1 from the power-saving mode to the normal mode.

Thus, even if, after the first period passes, a user having held down the power-saving key stays close to the image forming apparatus, other users can certainly use the image forming apparatus. Therefore, the user's convenience can be further increased.

Furthermore, in the above embodiment, the controller 10 sets the specified number at a predetermined default number. Alternatively, the controller 10 sets the specified number in accordance with an instruction accepted through the operation device 16 by the controller 10 and indicating a number.

Thus, the specified number can be set at an appropriate number without any instruction input by an administrator or a user or the administrator or the user can set the specified number at a desired number. Therefore, the user's convenience can be further increased.

In addition, in the above embodiment, when the image forming apparatus 1 is in the normal mode and, in this state, the second period has passed before the operation device 16 accepts an instruction, the controller 10 allows the image forming apparatus 1 to transition from the normal mode to the power-saving mode. When, after the transition to the power-saving mode based on the passage of the second period, the detection device 21 first detects a person, the controller 10 returns the image forming apparatus 1 from the power-saving mode to the normal mode.

When, like the above case, there is no possibility of the detection device 21 detecting the user having held down the power-saving key 16A, the return to the normal mode is made at the time when the detection device 21 first detects a person, rather than waiting until the number of times a person has been detected reaches the specified number. Therefore, when the transition to the power-saving mode has been made based on the passage of the second period, the return to the normal mode can be made with a more appropriate timing.

### (Other Modifications)

Although in the above embodiment the controller 10 sets the first period T1 at ten seconds, the present invention is not limited to the above embodiment. The first period T1 is not particularly limited so long as it is a period of time it normally takes for the user having held down the power-saving key 16A to leave the predetermined range around the image forming apparatus 1. For example, the controller 10 may set the first period T1 at 5 seconds, 30 seconds or the like.

Although in the above embodiment the controller 10 sets the specified number at two, the present invention is not limited to the above embodiment. The specified number is not particularly limited so long as it is at least two. For example, the controller 10 may set the specified number at three, four or so on.

Although in the above embodiment the image forming device 12 and so on form an image on a recording paper sheet P, the present invention is not limited to the above embodiment. The image forming device 12 and so on may form an image, not only on a recording paper sheet but on other types of recording media. An example of the other types of recording media is an OHP (overhead projector) sheet.

The present invention is not limited to the structure and configuration of the above embodiment and can be modified in various ways. Although in the above embodiment a multicolor multifunction peripheral is used as an image forming apparatus, it is merely illustrative and other types of image forming apparatuses, such as a black-and-white multifunction peripheral, a copier or a facsimile machine, may be used.

The structure, configuration, and processing of the above embodiment described with reference to FIGS. 1 to 5 are merely illustrative of the present invention and are not intended to limit the present invention to them.

## Claims

1. An image forming apparatus (1) comprising:
an image forming device (12) that forms an image on a recording paper sheet;
an operation device (16) that accepts an input of a user's instruction;
a detection device (21) that detects a person existing within a predetermined range; and
a control device (100) that includes a processor and functions as a controller (10) through the processor executing a control program, wherein when the image forming apparatus (1) is in a predetermined first power state and, in this state, the controller (10) accepts through the operation device (16) an instruction to transition to a second power state smaller in power consumption than in the first power state, the controller (10) allows the image forming apparatus (1) to transition from the first power state to the second power state,
wherein the controller (10) counts a number of times that the detection device (21) has detected a person within a predetermined first period from a time of acceptance of the instruction to transition,
when the counted number of times reaches a predetermined number of at least two, the controller (10) returns the image forming apparatus (1) from the second power state to the first power state, and
when the counted number of times falls short of the predetermined number, the controller (10) keeps the image forming apparatus (1) in the second power state.

2. The image forming apparatus (1) according to claim 1, wherein the controller (10) sets the first period at a predetermined default period or sets the first period in accordance with an instruction accepted through the operation device (16) by the controller (10) and indicating a period.

3. The image forming apparatus (1) according to claim 1, wherein when, after the first period passes from the time of acceptance of the instruction to transition, the detection device (21) first detects a person, the controller (10) returns the image forming apparatus (1) from the second power state to the first power state.

4. The image forming apparatus (1) according to claim 1, wherein the controller (10) sets the predetermined number at a predetermined default number or sets the predetermined number in accordance with an instruction accepted through the operation device (16) by the controller (10) and indicating a number.

5. The image forming apparatus (1) according to claim 1, wherein
when the image forming apparatus (1) is in the first power state and, in this state, a predetermined second period passes before the operation device (16) accepts the instruction to transition, the controller (10) allows the image forming apparatus (1) to transition from the first power state to the second power state, and
when, after the controller (10) allows the image forming apparatus (1) to transition to the second power state based on passage of the second period, the detection device (21) first detects a person, the controller (10) returns the image forming apparatus (1) from the second power state to the first power state.

6. The image forming apparatus (1) according to claim 1, wherein the controller (10) sets as the first period a period of time it normally takes for the user having input the instruction to transition to the operation device (16) to leave the predetermined range.
